# EUROPÄISCHE PATENTSCHRIFT

(11) **EP 1 747 297 B1**
(45) Veröffentlichungstag und Bekanntmachung des Hinweises auf die Patenterteilung: **14.11.2007**
(21) Anmeldenummer: 05738346.5
(22) Anmeldetag: 18.05.2005
(51) Int. Cl.: C21B 3/04, C21C 5/00, C21C 5/35, C21C 5/36, C21C 5/54, C21C 7/00, C22B 7/04

(54) **VERFAHREN ZUR REDUKTION VON CR AUS CR-HALTIGEN METALLURGISCHEN SCHLACKEN**
METHOD FOR REDUCING CR IN METALLURGICAL SLAGS CONTAINING CR
PROCEDE POUR REDUIRE LA TENEUR EN CR DE SCORIES METALLURGIQUES CONTENANT DU CR

(30) Priorität: 18.05.2004 AT 3672004
(43) Veröffentlichungstag der Anmeldung: 31.01.2007
(73) Patentinhaber: Holcim Ltd., 8050 Zürich (CH)
(72) Erfinder: TSCHUDIN, Markus, CH-4054 Basel (CH)
(74) Vertreter: Haffner, Thomas M.
(86) Internationale Anmeldenummer: PCT/IB2005/001342
(87) Internationale Veröffentlichungsnummer: WO 2005/113840

(56) Entgegenhaltungen:
- EP-A- 1 094 043
- WO-A-01/55459
- WO-A-01/55461
- US-A- 5 882 375
- US-B1- 6 332 910
- US-B1- 6 395 054
- US-B1- 6 409 793
- US-B1- 6 679 931

## Beschreibung

Die Erfindung bezieht sich auf ein Verfahren zur Reduktion des Chromgehaltes aus metallurgischen Schlacken, bei welchem die Schlacke flüssig auf ein Eisenbad gegeben wird und die Cr-Reduktion durch das Eisenbad mit einem C-Gehalt von 2 bis 4 Gew.% erfolgt.

Bei der Herstellung von nichtrostenden Stählen fallen beträchtliche Mengen von Schlacken an, deren Cr-Gehalt so hoch liegt, dass eine Reduktion wirtschaftlich sinnvoll ist. Aber auch aus Gründen des Umweltschutzes ist langfristig eine Reduzierung des Cr-Gehaltes dieser Schlacken wünschenswert.

In der WO 01/055461 A1 wird beispielsweise ein Verfahren beschrieben, bei dem der Cr-Gehalt der Schlacke durch die Reaktion mit einem C-haltigen Eisenbad auf ca. 0,05 bis 0,2 Gew.% reduziert wird.

Die praktische Durchführung dieses Verfahrens führt jedoch zu beträchtlichen Schwierigkeiten, die wahrscheinlich der Grund sind, weshalb das Verfahren bisher nicht angewendet wird.

Wie in der oben genannten Patentanmeldung ausgeführt, ist für die Reduktion ein C-Gehalt des Eisenbades von mindestens 3% erforderlich. Der Cr-Gehalt der Schlacke liegt bei 4 bis 6 Gew.%.

Die flüssige Cr-haltige Schlacke soll auf ein Roheisenbad aufgegeben werden. Unter Roheisen versteht man Eisen mit einem C-Gehalt von etwa 4 Gew.%.

Ein weiterer Nachteil der oben genannten Erfindung besteht darin, dass das aus der Schlacke reduzierte Chrom in einer Vorlegierung vorliegt, die einen hohen C-Gehalt aufweist. Dieser C-Gehalt müsste dann im E-Ofen wieder herausgefrischt werden, was den gesamten Prozess ungünstig beeinflusst.
In der Patentanmeldung WO 01/055459 A1 wird bereits darauf hingewiesen, dass flüssige Schlacken mit einem FeO-Gehalt von mehr als 5 Gew.% bei Aufgabe auf ein Roheisenbad heftige Reaktionen auslösen. Deshalb ist es erforderlich, den C-Gehalt des Eisenbades auf unter 0,5 Gew.% zu frischen, bevor die flüssige FeO-haltige Schlacke aufgebracht wird. Ähnliche Reaktionen treten jedoch auch auf, wenn CrO-haltige Schlacken mit einem Chromoxidgehalt über 2 Gew.% auf ein Eisenbad mit höherem C-Gehalt aufgegeben werden.

Die vorliegende Erfindung vermeidet die Nachteile der beschriebenen Verfahren. Erfindungsgemäß erfolgt die Cr-Reduktion aus metallurgischen Schlacken im Konverter durch die Kombination folgender Verfahrensschritte:
a) die Cr-haltige flüssige Schlacke mit einem Cr-Gehalt von 2 bis 20 Gew.% auf ein Eisenbad mit einem C-Gehalt unter 1 Gew.% aufgegeben wird, worauf
b) der Kohlenstoffgehalt des Eisenbades durch Zugabe von C-Trägern bei gleichzeitiger Energiezufuhr auf 2 bis 4 Gew.% angehoben wird, dass
c) die flüssige Schlacke mit einem Cr-Gehalt 0,1 Gew.% nach der Cr-Reduktion abgestochen wird, dass
d) der Eisenschmelze ein Kühlmittel, vorzugsweise Schrott, zugegeben und der C-Gehalt der Schmelze auf unter 1 Gew.%, vorzugsweise auf unter 0,5 Gew.%, abgesenkt wurd und dass
e) ein Teil der Cr-haltigen Schmelze flüssig abgestochen wird, während der Rest flüssig im Konverter für die Behandlung der folgenden Schmelze gehalten wird.

Zur Durchführung des erfindungsgemäßen Verfahrens ist ein bodenblasender Konverter, bei dem die Reaktionsgase durch einen Heißluftstrahl nachverbrannt werden, besonders geeignet. Erst durch den hohen Wirkungsgrad bei der Zufuhr von Energie bei diesem Verfahren ist die erforderliche Kohlemenge so gering, dass das Verfahren wirtschaftlich betrieben werden kann.

Für das erfindungsgemäße Verfahren ist es wichtig, dass die Schlacke nach der Reduzierung des Cr-Gehaltes von dem Eisenbad bei hohem C-Gehalt getrennt wird. Es verbleibt dann nur eine geringe Menge an Restschlacke im Konverter, die dann während der folgenden Erniedrigung des C-Gehaltes im Eisenbad wieder im Cr-Gehalt etwas ansteigt. Die dabei verschlackte Cr-Menge ist jedoch so gering, dass sie sich auf die Cr-Bilanz kaum auswirkt. Außerdem verbleibt diese Schlacke im Konverter und der Cr-Gehalt wird dann in der folgenden Charge wieder reduziert.

Zur Kühlung beim Frischen der Eisenschmelze kann z.B. unlegierter Schrott eingesetzt werden, wie er üblicherweise mit einem Anteil von 30 Gew.% bei der Herstellung von nichtrostenden Stahlgüten verwendet wird. Unlegierter Schrott hat hier den Vorteil, dass der Cr-Gehalt der Eisenschmelze niedrig bleibt, was zu kürzeren Behandlungszeiten für die Reduktion der Schlacke führt. Es können aber auch Rückstände, die aus den Reststoffen bei der Aufarbeitung von Abfällen anfallen oder auch Schlacken aus dem AOD-Konverter oder der Pfannenentgasungsanlage mit eingeschmolzen werden.

Gegenüber dem Stand der Technik weist das erfindungsgemäße Verfahren folgende Vorteile auf:
- das für die Behandlung der Cr-haltigen Schlacke erforderliche Eisenbad wird aus der vorhergehenden Schmelze gewonnen.
- die im Konverter durch die Reduktion der Cr-haltigen Schlacke gebildete Vorlegierung hat einen niedrigen C-Gehalt und kann flüssig' dem E-Ofen zugesetzt werden.
- der unlegierte Schrott wird kostengünstig aufgeschmolzen und führt zu einer entsprechenden Produktionssteigerung des E-Ofens.

An einem Beispiel wird das erfindungsgemäße Verfahren näher erläutert:

In einem 100 t E-Ofen werden Stahlgüten mit einem Cr-Gehalt von 18 Gew.% und einem Ni-Gehalt von 8 Gew.% hergestellt. Bei der Herstellung gemäß dem Stand der Technik werden in einem E-Ofen 60 t legierter Schrott, 35 t unlegierter Schrott und 15 t FeCr eingeschmolzen. Nach der Reduzierung der Schlacke mit Ferro-Silizium werden 100 t flüssiger Stahl mit 18 Gew.% Cr, 8 Gew.% Ni und 0,5 Gew.% C zusammen mit 10 t Schlacke abgestochen. Die Schlacke hat einen Cr-Gehalt von 5 Gew.% und einen FeO-Gehalt von 1,5.Gew.%.

Diese Schlacke wird gemäß der vorliegenden Erfindung flüssig in einen Konverter chargiert, in dem sich 20 t einer Eisenschmelze mit 0,5 Gew.% C und 3 Gew.% Cr aus der vorhergehenden Schmelze befinden.

Der Konverter wird mit einer Blasrate von 5.000 Nm/h für den über den Boden eingebrachten Sauerstoff und mit einer Heißluftaufblasrate von 25.000 Nm/h betrieben, wobei der Heißwind auf 25 Gew.% O₂ angereichert ist. Insgesamt werden 5 t staubförmige Kohle zugeführt, die durch Bodendüsen eingeblasen werden.

Für den ersten Teilschritt, der Erhöhung des C-Gehaltes und der Temperatur des Eisenbades sowie der Reduktion des Chroms aus der Schlacke, werden 2 t Kohle benötigt. Es ist zweckmäßig, bei diesem ersten Teilschritt auch die bei der Aufarbeitung von Abfällen anfallenden Mengen an Schlacken und legierten Schrott, die etwa 4 Gew.% der erzeugten Stahlmenge betragen, mit einzuschmelzen. Hierfür sind ca. 0,5 t Kohle erforderlich. Anschließend wird die Schlacke, deren Cr-Gehalt etwa 0,1 Gew.% beträgt, abgestochen. Falls erforderlich kann der Cr-Gehalt durch Zugabe von 4 kg FeSi/t Schlacke vor dem Abschlacken auf ca. 0,01 Gew.% reduziert werden.

In das Eisenbad, das einen C-Gehalt von 3% und einen Cr-Gehalt von 7 Gew.% aufweist, werden 30 t an unlegierten Schrott chargiert. Für dessen Einschmelzen werden 3 t Kohle benötigt, wovon 2,5 t staubförmig eingeblasen werden, die restliche Menge liefert das Eisenbad, dessen C-Gehalt während des Einschmelzens von 3 Gew.% auf 0,5 Gew.% abgesenkt wird.

Von der im Konverter befindlichen Vorlegierung mit 3 Gew.% Cr werden 30 t abgestochen und flüssig dem E-Ofen zugegeben. Die restliche Menge von 20 t verbleibt für die nächste Charge im Konverter.

Die oben genannten Mengen können in weiten Grenzen variiert werden. So kann beispielsweise die zusätzlich eingeschmolzene Schrottmenge auf ca. 15 t reduziert werden. Es entsteht dann eine Vorlegierung mit 7 Gew.% Cr für den Einsatz in dem E-Ofen. Damit steigt jedoch der Cr-Gehalt im Eisenbad schon beträchtlich an, was zu einer Verlängerung der Zeit für die Cr-Reduktion aus der Schlacke führt. Der Prozess sollte so geführt werden, dass bei den einzelnen Teilschritten der Cr-Gehalt des Eisenbades 10 Gew.% nicht übersteigt.

Es liegt auch im Sinne der vorliegenden Erfindung, die Zusammensetzung der Schlacke durch Zugabe entsprechender schlackenbildender Materialen so zu verändern, dass diese Schlacken bei der Zementproduktion eingesetzt werden können.

## Patentansprüche

1. Verfahren zur Reduktion des Chromgehaltes aus metallurgischen Schlacken im Konverter, bei welchem die Schlacke flüssig auf ein Eisenbad gegeben wird und die Cr-Reduktion durch das Eisenbad mit einem C-Gehalt von 2 bis 4 Gew.% erfolgt, **dadurch gekennzeichnet, dass**
a) die Cr-haltige flüssige Schlacke mit einem Cr-Gehalt von 2 bis 20 Gew.% auf ein Eisenbad mit einem C-Gehalt unter 1 Gew.% aufgegeben wird, worauf
b) der Kohlenstoffgehalt des Eisenbades durch Zugabe von C-Trägern bei gleichzeitiger Energiezufuhr auf 2 bis 4 Gew.% angehoben wird, dass
c) die flüssige Schlacke mit einem Cr-Gehalt 0,1 Gew.% nach der Cr-Reduktion abgestochen wird, dass
d) der Eisenschmelze ein Kühlmittel, vorzugsweise Schrott, zugegeben und der C-Gehalt der Schmelze auf unter 1 Gew.% abgesenkt wird und dass
e) ein Teil der Cr-haltigen Schmelze flüssig abgestochen wird, während der Rest flüssig im Konverter für die Behandlung der folgenden Schmelze gehalten wird.

2. Verfahren nach Anspruch 1, **dadurch gekennzeichnet, dass** Kühlmittel zur Absenkung des C-Gehalts der Schmelze auf unter 0,5 Gew.% zugesetzt wird.

## Claims

1. A method for reducing the chromium content from metallurgical slags in a converter, wherein the slag is charged in the molten state onto an iron bath and the Cr-reduction is effected by the iron bath having a C-content of 2 to 4% by weight, **characterized in that**
a) the Cr-containing molten slag having a Cr-content of 2 to 20% by weight is top-charged onto an iron bath having a C-content of below 1% by weight, whereupon
b) the carbon content of the iron bath is raised to 2 to 4% by weight by adding carbon carriers under the simultaneous supply of energy,
c) the molten slag having a Cr-content of 0.1% by weight after the Cr-reduction is tapped,
d) a coolant, preferably scrap, is added to the iron melt, and the carbon content of the melt is lowered to below 1% by weight, and
e) a portion of the Cr-containing melt is tapped in the molten state, while the remaining portion is left in the converter in the molten state for treating the subsequent melt.

2. A method according to claim 1, **characterized in that** a coolant is added for lowering the C-content of the melt to below 0.5% by weight.

## Revendications

1. Procédé pour la réduction de la teneur en chrome de laitiers métallurgiques dans le convertisseur, procédé dans lequel le laitier est placé à l'état liquide sur un bain de fer, et la réduction du Cr s'effectue par le bain de fer ayant une teneur en C de 2 à 4 % en poids, **caractérisé en ce que**:
a) on place le laitier liquide contenant du Cr, ayant une teneur en Cr de 2 à 20 % en poids, sur un bain de fer ayant une teneur en C inférieure à 1 % en poids, ensuite de quoi
b) on augmente à une valeur de 2 à 4 % en poids la teneur en carbone du bain de fer, par addition de porteurs de C, avec simultanément un apport d'énergie,
c) on évacue par coulée après réduction du Cr le laitier liquide ayant une teneur en Cr de 0,1 % en poids,
d) on ajoute à la masse fondue de fer un agent de refroidissement, de préférence des ferrailles, et on abaisse à une valeur inférieure à 1 % en poids la teneur de la masse fondue en carbone, et
e) on évacue par coulée une partie de la masse fondue contenante du Cr, pendant que le reste est maintenu à l'état liquide dans le convertisseur pour le traitement de la masse fondue suivante.

2. Procédé selon ra revendication 1, **caractérisé en ce qu'**on ajoute un agent de refroidissement pour abaisser la teneur en C du bain à une valeur inférieure à 0,5 % en poids.
